# EUROPÄISCHE PATENTSCHRIFT

(11) **EP 2 309 007 B1**
(45) Veröffentlichungstag und Bekanntmachung des Hinweises auf die Patenterteilung: **03.09.2014**
(21) Anmeldenummer: 10186853.7
(22) Anmeldetag: 07.10.2010
(51) Int. Cl.: C21D 1/10, C21D 9/30, H05B 6/38, H01F 38/14

(54) **Vorrichtung zum Härten eines zylindrischen Abschnitts eines Werkstücks und Verwendung einer solchen Vorrichtung**
Device for hardening a cylindrical section of a workpiece and use of such a device
Dispositif de durcissement d'une section cylindrique d'une pièce usinée et utilisation d'un tel dispositif

(30) Priorität: 08.10.2009 DE 102009048768
(43) Veröffentlichungstag der Anmeldung: 13.04.2011
(73) Patentinhaber: SMS Elotherm GmbH, 42897 Remscheid (DE)
(72) Erfinder: Dappen, Stefan, Dr., 52068, Aachen (DE)
(74) Vertreter: Cohausz & Florack

(56) Entgegenhaltungen:
- EP-A2- 1 624 077

## Beschreibung

Die Erfindung betrifft eine Vorrichtung zum Härten der Oberfläche eines zylindrischen Abschnitts eines Werkstücks, bei dem im Übergangsbereich zwischen dem zylindrischen Abschnitt und einem angrenzenden Werkstückteil eine in Achsrichtung des Werkstücks in das Werkstückteil eingeschnittene Hinterschneidung ausgebildet ist. Die Vorrichtung umfasst dabei einen Induktor, der einen in Umfangsrichtung des zylindrischen Abschnitts verlaufenden Heizleiterast zum induktiven Erwärmen des betreffenden Abschnitts aufweist, eine Stelleinrichtung zum Einrücken des Heizleiterastes des Induktors in die Hinterschneidung und eine Energieversorgung, welche den Induktor im Betrieb mit elektrischer Energie versorgt.

Derartige Vorrichtungen werden insbesondere eingesetzt, um die Lagerflächen von Hubzapfen einer Kurbelwelle zu härten, bei der die Hubzapfen seitlich von Wangen begrenzt sind. In vielen Fällen ist bei solchen Kurbelwellen oder im Einsatz von vergleichbar belasteten Werkstücken zur Vermeidung von Belastungsspitzen im Bereich der Übergänge zwischen der Lagerfläche des Hubzapfens und der angrenzenden Wange jeweils eine Hinterschneidung eingeformt.

Um die Lagerfläche auch im Bereich dieser Hinterschneidung zu härten, wird bei einer aus der DE 36 23 119 C1 bekannten Vorrichtung zum induktiven Erwärmen der zu härtenden Lagerstelle ein in zwei Hälften geteilter Induktor verwendet. Eine der Induktorhälften ist fest mit einer Stelleinheit verbunden, während die zweite Induktorhälfte schwenkbar an der feststehenden Induktorhälfte befestigt ist. Die Stelleinheit umfasst dabei eine erste Einrichtung zum Zustellen des Induktors auf die zu härtende Lagerstelle, eine zweite Stelleinrichtung zum Bewegen des Induktors achsparallel zur Längsachse der Welle und eine dritte Stelleinrichtung zum Verschwenken der schwenkbaren Induktorhälfte in ihre Arbeitsposition. Auf diese Weise können die Hälften des Induktors mit Hilfe der Stelleinheit gemeinsam in eng aneinander liegender Stellung auf die zu härtende Lagerfläche zugestellt werden, bis die Heizleiteräste des Induktors auf der Lagerfläche aufsitzen. Anschließend wird zunächst die feststehende Induktorenhälfte in ihre Arbeitsposition gebracht, indem sie gemeinsam mit der schwenkbaren Induktorhälfte achsparallel zur Längsachse der Welle bewegt wird. Daraufhin wird die schwenkbare Induktorhälfte in Richtung der ihr zugeordneten Hinterschneidung verschwenkt.

Dieser vergleichbar einfachen Art und Weise der Positionierung des Induktors steht ein erheblicher apparativer Aufwand gegenüber. Darüber hinaus erweist es sich schwierig, die schwenkbare Induktorhälfte in eine optimale Arbeitslage zu bringen und dort so zu führen, dass auch im laufenden Betrieb ihre einwandfreie Funktion gewährleistet ist. Dies führt zu einem verschlechterten Arbeitsergebnis. Schließlich erweist sich sowohl die elektrische Verbindung als auch die Kühlmittelversorgung der schwenkbaren Induktorhälfte als störanfällig.

Um die Effektivität beim Härten von Lagerstellen einer Kurbelwelle mit Hinterschneidungen weiter zu steigern, ist in der DE 198 08 763 C1 eine Vorrichtung vorgeschlagen worden, die mit zwei voneinander unabhängigen Erwärmungseinheiten ausgestattet ist, von denen jede einen Induktor und zumindest die zugehörige Stromversorgungseinrichtung umfasst. Auf diese Weise kann auf störungsanfällige Anschlüsse der elektrischen Verbindungen der Induktoren und der ihnen jeweils zugeordneten Erwärmungseinheit sowie der Kühlmittelversorgung verzichtet werden. Auch können die von den Erwärmungseinheiten gegebenenfalls zusätzlich getragenen Abschreckbrausen problemlos mit Abschreckfluid versorgt werden. Die Abmessungen und die äußere Form der Induktoren der beiden Erwärmungseinheiten sind bei der bekannten Vorrichtung derart aufeinander abgestimmt, dass je nach Anwendungsfall ein einzelner der Induktoren oder beide Induktoren gemeinsam und gleichzeitig in eine eng benachbarte Stellung auf die zu bearbeitende Welle zugestellt werden können. In dieser Stellung ist die gesamte in Achsrichtung der Welle gemessene Breite beider Induktoren kleiner als die Breite des freien Raums, welcher zwischen den an die zu härtende Lagerstelle angrenzenden Wellenteile vorhanden ist, so dass während des Einfahrens der Induktoren in den freien Raum keine Gefahr einer Kollision besteht. Aufgrund der Unabhängigkeit der Erwärmungseinheiten kann darüber hinaus mittels einfachster Maßnahmen, beispielsweise durch die Verwendung von Gleitschuhen, problemlos sichergestellt werden, dass die Induktoren während der Bearbeitung ihre Arbeitsposition einhalten.

Diesen Vorteilen der aus der DE 198 08 763 C1 bekannten Vorrichtung steht in der Praxis der Nachteil gegenüber, dass beim Zustellen und Einfahren der Induktoren jeweils große Massen bewegt werden müssen. Dies macht nicht nur starke Antriebe erforderlich, sondern beschränkt auch die Möglichkeit, die Stellbewegungen mit einer für einen schnell getakteten Serienbetrieb erforderlichen Geschwindigkeit auszuführen. Darüber hinaus führt die Notwendigkeit, für jeden der Induktoren nicht nur separate Stelleinrichtungen, sondern auch jeweils eine separate Energie- und Kühlmittelversorgung zur Verfügung zu stellen, zu hohen Herstell- und Betriebskosten.

Diese Probleme sollen bei der aus der EP 1 624 077 A2 bekannten Vorrichtung zum Härten der Lagerflächen einer mit Hinterschneidungen versehenen Kurbelwelle nicht mehr bestehen. Diese bekannte Vorrichtung umfasst wie der voranstehend bereits erläuterte Stand der Technik eine Erwärmungseinheit, die mit einer Stromversorgung verbunden und mit einem Induktor versehen ist. Ebenfalls wie beim Stand der Technik weist der Induktor zwei beabstandet zueinander angeordnete und jeweils in Umfangsrichtung der zu härtenden Lagerstelle verlaufende Heizleiterarme auf. Jeder der beiden Heizleiterarme ist dabei mit einem inneren Laufflächenhärtungsast und zwei äußeren Radienhärtungsästen versehen, wobei jeweils der Laufflächenhärtungsast mit den Radienhärtungsästen durch Stromführungsglieder mechanisch verbunden ist, die die Radienhärtungsäste tragen. Die mechanische Verbindung ist dabei derart elastisch, dass die Radienhärtungsäste relativ zum Laufflächenhärtungsast unter Beibehaltung der elektrischen Verbindung in axialer Richtung der zu härtenden Welle verschiebbar sind. Die in der Praxis für diesen Zweck eingesetzten flexiblen Kupferelemente werden beim Einfahren der Radienhärtungsäste in die jeweilige Hinterschneidung auf- und beim Herausfahren wieder zurückgebogen. Diese Belastung bringt es mit sich, dass die elastischen elektrischen Verbindungen nach vergleichbar kurzer Einsatzdauer ermüden und ihre ordnungsgemäße Funktion nicht mehr gewährleistet ist.

Vor diesem Hintergrund bestand die Aufgabe der Erfindung darin, eine Vorrichtung der eingangs genannten Art zu schaffen, mit welcher sich bei verringertem apparativen Aufwand ein verbessertes Arbeitsergebnis erzielen lässt. Darüber hinaus sollte eine vorteilhafte Verwendung einer solchen Vorrichtung angegeben werden.

In Bezug auf die Vorrichtung ist diese Aufgabe erfindungsgemäß dadurch gelöst worden, dass eine solche Vorrichtung gemäß Anspruch 1 ausgebildet ist. Vorteilhafte Ausgestaltungen der erfindungsgemäßen Vorrichtung sind in den auf Anspruch 1 rückbezogenen Ansprüchen angegeben.

Eine erfindungsgemäße Vorrichtung lässt sich vorteilhafterweise gemäß Anspruch 8 verwenden.

Ausgestaltungen dieser erfindungsgemäßen Verwendung sind in den auf Anspruch 8 rückbezogenen Ansprüchen angegeben.

Eine erfindungsgemäße Vorrichtung zum Härten eines der Oberflächen eines zylindrischen Abschnitts eines Werkstücks, bei dem im Übergangsbereich zwischen der zu härtenden Oberfläche und einem angrenzenden Werkstückteil eine in Achsrichtung des Werkstücks in das Werkstückteil eingeschnittene Hinterschneidung ausgebildet ist, umfasst in Übereinstimmung mit dem in der Einleitung der vorliegenden Beschreibung diskutierten Stand der Technik einen Induktor, der einen in Umfangsrichtung der zu härtenden Oberfläche verlaufenden Heizleiterast zum induktiven Erwärmen aufweist. Des Weiteren besitzt eine erfindungsgemäße Vorrichtung auch eine Stelleinrichtung zum Einrücken des Heizleiterastes des Induktors in die Hinterschneidung und eine Energieversorgung, die den Induktor im Betrieb mit elektrischer Energie versorgt.

Erfindungsgemäß ist nun der Induktor in einen Energieversorgungsteil, der an die Energieversorgung angeschlossen ist, und einen Arbeitsteil aufgeteilt, der den Heizleiterast umfasst und mit der Stelleinrichtung verkoppelt ist, die den Arbeitsteil zum Einrücken des Heizleiterastes in die Hinterschneidung relativ zur zu härtenden Oberfläche und zum Energieversorgungsteil verschiebt.

Um den Arbeitsteil mit der für die induktive Erwärmung der zu härtenden Oberfläche benötigten elektrischen Energie zu versorgen, ist erfindungsgemäß zusätzlich eine Übertragungseinheit vorgesehen, die elektrische Energie berührungslos vom Energieversorgungsteil auf den Arbeitsteil des Induktors überträgt und so den Heizleiterast des Induktors speist.

Die Erfindung beruht somit auf der Erkenntnis, dass es mit Hilfe einer berührungslos arbeitenden Übertragseinheit möglich ist, ausreichend elektrische Energie vom einen Teil des Induktors, nämlich dem mit der Energieversorgung verkoppelten Energieversorgungsteil, auf den Arbeitsteil auch dann noch zu übertragen, wenn der Arbeitsteil zum Einstellen seiner Arbeitsposition relativ zum Energieversorgungsteil beweglich ist.

Dies erlaubt es einerseits, das Arbeitsteil mit einfachen Bewegungen in seine Arbeitsposition zu bringen. Dazu sind weder aufwändige Stelleinrichtungen noch besondere Getriebe oder vergleichbares erforderlich. Stattdessen können einfache Linearantriebe verwendet werden, um die für das Ein- und Herausfahren des Heizleiterastes des in bzw. aus der Hinterschneidung notwendigen Bewegungen des Arbeitsteils auszuführen.

Andererseits erlaubt es die Erfindung, vollständig auf feste Verbindungen zwischen dem im Härtebetrieb stillstehenden Energieversorgungsteil und dem bewegten Arbeitsteil des Induktors zu verzichten. Dies betrifft sowohl die elektrischen Leiter als auch Schlauchverbindungen, über die Kühlwasser zur Kühlung des Heizleiterastes geleitet werden. Die Belastungen insbesondere der elektrischen Leiter, die beim Stand der Technik unvermeidbar durch die zum Einrücken des Induktors in die in Härtung einzubeziehende Hinterschneidung unverzichtbare Relativbewegung zwischen Energieversorgung und Induktor bewegt werden, treten bei einer erfindungsgemäßen Vorrichtung folglich nicht mehr auf. In Folge ist bei erfindungsgemäßen Vorrichtungen die Gefahr von Materialermüdung, Brüchen elektrischer Leiter oder desgleichen nicht mehr gegeben.

Ein weiterer wesentlicher Vorteil der Erfindung besteht darin, dass die zu bewegenden Massen auf ein Minimum reduziert sind. Insbesondere werden keine aufwändigen Stelleinrichtungen mehr benötigt, die die Bewegungen des Induktors nachvollziehen müssen, um die Arbeitsposition im Hinterschnittbereich zu erreichen. Die zum Bewegen des Arbeitsteils vorgesehene Stelleinrichtung muss lediglich so ausgeführt sein, dass sie den Heizleiterast ausreichend genau zum Werkstück positioniert. Dazu kann ein mechanischer Anschlag vorgesehen sein. Im Bereich des Übertragers ist es dagegen nicht erforderlich, die beiden Seiten des Übertragers genau aufeinander auszurichten, da nach dem Einschalten der Energie eine Selbstzentrierung durch die magnetischen Kräfte stattfindet. Somit sind im Vergleich zu bekannten Verfahren, die auf dem mechanischen Schließen eines elektrischen Kontaktes beruhen, deutliche geringere Positionierkräfte und damit kleinere Stellglieder erforderlich.

Eine besonders einfache Gestaltung einer erfindungsgemäßen Vorrichtung ergibt sich dann, wenn die Teilungsebene zwischen dem Arbeitsteil und dem Energieversorgungsteil parallel zur Längsachse des Werkstücks ausgerichtet ist. Dementsprechend liegt die Teilungsebene bei einem Werkstück, dessen Längsachse horizontal ausgerichtet ist, ebenfalls in horizontaler Ausrichtung. Ebenso ist es jedoch auch möglich, die Teilungsebene senkrecht zur Längsachse des Werkstücks auszurichten. Im Fall einer horizontal ausgerichteten Längsachse des Werkstücks bedeutet dies, dass die Teilungsebene vertikal ausgerichtet sein kann. Denkbar ist es darüber hinaus, die Teilungsebene quer, insbesondere normal zur Werkstücklängsachse auszurichten.

Grundsätzlich zeigen sich die Vorteile der Erfindung schon dann, wenn die zu härtende zylindrische Fläche des Werkstücks nur entlang ihres einen Randes in eine Hinterschneidung übergeht. Besonders effektiv lässt sich die Erfindung jedoch dann nutzen, wenn an den beiden in Achsrichtung des Werkstücks gegenüberliegenden Rändern der zu härtenden Fläche jeweils eine Hinterschneidung vorhanden ist. Zum Härten einer derart ausgebildeten Fläche kann die erfindungsgemäße Vorrichtung zwei Arbeitsteile umfassen, von denen das eine Arbeitsteil einem ersten, am einen Rand der zu härtenden Fläche des Werkstücks vorhandenen Hinterschnitt und der andere Arbeitsteil einem zweiten Hinterschnitt zugeordnet ist, der am dem ersten Rand gegenüberliegenden zweiten Rand der zu härtenden Fläche des Werkstücks vorhanden ist. Der besondere Vorzug der Erfindung besteht in diesem Zusammenhang darin, dass beide Arbeitsteile problemlos über eine einzige Übertragungseinheit gemeinsam mit der erforderlichen elektrischen Energie versorgt werden können. Die Kosten für die Herstellung und den Betrieb der erfindungsgemäßen Vorrichtungen sind damit deutlich gegenüber dem Stand der Technik reduziert.

Gemäß einer weiteren praxisgerechten Ausgestaltung der Erfindung überträgt die Übertragungseinheit die elektrische Energie induktiv auf den Arbeitsteil. Zu diesem Zweck kann die Übertragungseinheit als Transformator ausgebildet sein, bei dem die Primärseite Teil des Energieversorgungsteils und die Sekundärseite Teil des Arbeitsteils ist. Typischerweise werden dazu im Bereich der Übertragungseinheit die Leiter des Energieversorgungsteils und die des Arbeitsteils in enger Nachbarschaft isoliert nebeneinander geführt, um eine gute Übertragungswirkung zu erzielen. Die Leiter werden vorteilhaft mit magnetisch leitenden Werkstoffen wie weichmagnetischen Kernen oder Elektroblechen bestückt, um eine bessere Führung des magnetischen Feldes bei der Übertragung zu erreichen. In Abhängigkeit vom zur Verfügung stehenden Platz können die Leiter dabei sowohl auf der Seite des Energieversorgungsteils als auch auf der Seite des Arbeitsteils wahlweise ein- oder mehrwindig ausgeführt werden.

Im Fall, dass zur Vermeidung von Überhitzungen des Heizleiters eine Heizleiterkühlung erforderlich ist, kann der Arbeitsteil eine Kühleinrichtung zum Kühlen des Heizleiterastes umfassen. Die erfindungsgemäße Vorrichtung umfasst dann in an sich bekannter Weise eine Kühlmittelversorgung, an die der Arbeitsteil angeschlossen ist. Der Heizleiterast selbst kann dabei in ebenfalls bekannter Weise mindestens abschnittsweise hohl ausgebildet und über seinen hohlen Abschnitt im Betrieb von Kühlmittel durchströmt sein.

Aufgrund ihrer geringen bewegten Massen und der erfindungsgemäß zwischen den beiden Induktorteilen berührungslos erfolgenden Übertragung der elektrischen Energie eignet sich eine erfindungsgemäße Vorrichtung in besonderer Weise zum Härten einer Lagerstelle einer Welle, bei der an einem Übergang zwischen der Lagerstelle und einem angrenzenden Wellenabschnitt eine in Achsrichtung der Welle ausgerichtete Hinterschneidung ausgebildet ist. Bei der in erfindungsgemäßer Weise bearbeiteten Welle handelt es sich typischerweise um eine Kurbelwelle für einen Verbrennungsmotor.

Nachfolgend wird die Erfindung anhand einer Ausführungsbeispiele darstellenden Zeichnung näher erläutert. Es zeigen jeweils schematisch:
- Fig.1: eine Vorrichtung zum Härten der Lagerfläche beim Zustellen des Induktors in Richtung des Zapfens in einer Ansicht von vorne;
- Fig. 2: die Vorrichtung gemäß Fig. 1 mit in Arbeitsposition befindlichem Induktor;
- Fig. 3: den Energieversorgungsteil eines Induktors zum Härten der Lauffläche eines Zapfens einer Kurbelwelle in seitlicher Ansicht;
- Fig. 4: den Energieversorgungsteil in einer teilgeschnittenen Ansicht von oben;
- Fig. 5: die Arbeitsteile des Induktors in seitlicher Ansicht;
- Fig. 6: den dem einen Rand der zu härtenden Lagerfläche zugeordneten Arbeitsteil des Induktors in einer Ansicht von vorne;
- Fig. 7: den dem anderen Rand der zu härtenden Lagerfläche zugeordneten Arbeitsteil des Induktors in einer Ansicht von vorne.

Die Vorrichtung 1 zum induktiven Erwärmen und Härten der Lagerfläche F eines Hubzapfens Z einer weiter nicht dargestellten Kurbelwelle K für einen Verbrennungsmotor umfasst einen Induktor 2, eine konventionell mit Transformator und Umrichter ausgebildete Energieversorgung 3, die die für den Betrieb des Induktors 2 benötigte elektrische Energie zur Verfügung stellt, sowie eine Kühlmittelversorgung 4, die Kühlmittel zum Kühlen des Induktors 2 liefert.

Zusätzlich weist die Vorrichtung 1 eine hier der Übersichtlichkeit halber nicht gezeigte Abschreckeinrichtung auf, über die Abschreckmittel auf die mittels des Induktors 2 auf Härtetemperatur erwärmte Lagerfläche F aufgebracht wird, um durch eine ausreichend schnelle Abkühlung dort Härtegefüge zu erzeugen.

Die Lagerflächen F der Kurbelwelle K sind an ihren Rändern jeweils durch eine Kurbelwange W1,W2 begrenzt. Im Bereich des Übergangs von der jeweiligen Lagerfläche F in die ihr zugeordnete Seitenfläche der jeweiligen Kurbelwangen W1,W2 ist in die Kurbelwangen W1,W2 jeweils eine Hinterschneidung H1,H2 eingestochen, die sich über eine Tiefe von typischerweise -5 - 10 mm in Richtung der Längsachse L der Kurbelwelle K in die jeweilige Wange W1,W2 hinein erstrecken.

Der Induktor 2 ist in einer parallel zur Längsachse L der Kurbelwelle K verlaufenden Teilungsebene T in einen Energieversorgungsteil 5 und zwei Arbeitsteile 6,7 geteilt. Die Längsachse L fällt dabei mit der Drehachse zusammen, um die die Kurbelwelle K während der Härtungsbehandlung der Lagerfläche F des bezogen auf die Längsachse L exzentrisch angeordneten Hubzapfens Z rotiert.

Der Energieversorgungsteil 5 ist von einer hier nicht dargestellten, in an sich bekannter Weise ausgebildeten Stelleinrichtung getragen, die den Induktor 2 mit seinem Energieversorgungsteil 5 und seinen Arbeitsteilen 6,7 in vertikaler Richtung V auf die jeweils zu härtende Lagerfläche F zustellt und ihn während der Härtungsbehandlung der Bewegung des Zapfens Z nachführt.

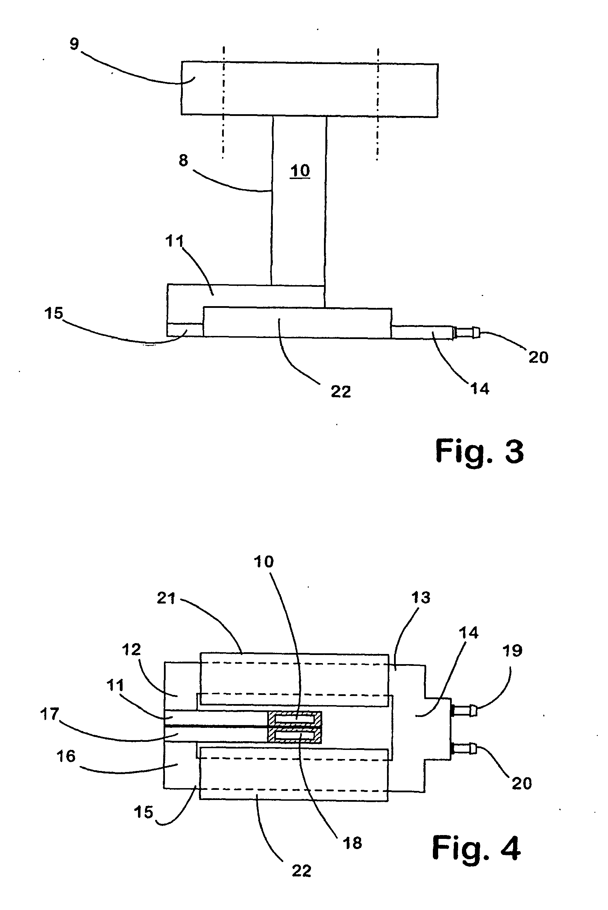

Der Energieversorgungsteil 5 weist einen aus einem hohlen, im Querschnitt rechteckigen Kupferrohr gefertigten Leiter 8 auf, der über einen Anschlussabschnitt 9 fest mit der Energieversorgung 3 verbunden ist. Der Leiter weist einen von dem Anschlussabschnitt 9 ausgehenden, vertikalen nach unten verlaufenden ersten Vertikalabschnitt 10, einen sich daran anschließenden und rechtwinklig zum ersten Vertikalabschnitt 10 in horizontaler Richtung ausgerichteten ersten Horizontalabschnitt 11, einen sich an den ersten Horizontalabschnitt 11 im rechten Winkel anschließenden und ebenfalls horizontal ausgerichteten zweiten Horizontalabschnitt 12, einen daran sich ebenfalls im rechten Winkel anschließenden und in derselben Horizontalebene wie dieser verlaufenden dritten Horizontalabschnitt 13, dessen Länge größer ist als die Länge des zweiten Horizontalabschnitt 12, einen parallel zum zweiten Horizontalabschnitt 12 verlaufenden und in derselben Ebene wie dieser ausgerichteten vierten Horizontalabschnitt 14, dessen Länge dem Doppelten der Länge des zweiten Horizontalabschnitts 12 zuzüglich eines geringen Übermaßes entspricht, einem an den vierten Horizontalabschnitt 14 angeschlossenen und parallel zum dritten Horizontalabschnitt 13 in derselben Horizontalebene verlaufenden fünften Horizontalabschnitt 15, einen an den fünften Horizontalabschnitt 15 angeschlossenen, auf den zweiten Horizontalabschnitt 12 zulaufenden und dieselbe Länge wie dieser aufweisenden sechsten Horizontalabschnitt 16, einen an den sechsten Horizontalabschnitt 16 angeschlossenen und parallel zum ersten Horizontalabschnitt 11 ausgerichteten und in derselben Ebene wie dieser verlaufenden siebten Horizontalabschnitt 17 und einen an diesen angeschlossenen, parallel zum ersten Vertikalabschnitt 10 verlaufenden und zurück zum Anschlussabschnitt 9 führenden zweiten Vertikalabschnitt 18 auf. Der Heizleiter 8 des Energieversorgungsteils 5 hat auf diese Weise eine schuhartige, in Draufsicht (Fig. 4) rechtwinklige Form.

Im Bereich des vierten Horizontalabschnitts 14 des Heizleiters 8 sind Anschlüsse 19,20 für eine Kühlwasserzu- und -abführung vorgesehen, über die der Heizleiter 8 an die Kühlmittelversorgung 4 angeschlossen ist.

Auf den langen Horizontalabschnitten 13,15 des Energieversorgungsteils 5 sitzen weichmagnetische Kerne oder Elektrobleche 21,22 einer Übertragungseinheit U. Die Kerne 21,22 erstrecken sich dabei über die gesamte Länge des jeweiligen Horizontalabschnitts 13,15.

Die Arbeitsteile 6,7 sind spiegelsymmetrisch, im Übrigen aber identisch aufgebaut.

Sie weisen jeweils einen ebenfalls aus einem hohlen Kupferrohr mit recheckigem Querschnitt geformten Heizleiter 23 auf, der einen langen ersten Horizontalabschnitt 24, an dessen einen Schmalseite ein mit der Kühlmittelversorgung 4 verbundener Anschluss 32a für eine Kühlwasserzufuhr angeordnet ist, einen angrenzend zu der anderen Schmalseite des Horizontalabschnitts 24 von dem Horizontalabschnitt 24 unter einem rechten Winkel S-förmig gebogenen nach unten wegführenden ersten Vertikalabschnitt 25, einen an den Vertikalabschnitt 25 angeschlossenen, kreisbogenförmig sich in Umfangsrichtung der zu härtenden Lagefläche F erstreckenden und einen Winkel von ca. 90° umgreifenden Heizleiterast 26, einen an den Heizleiterast 26 angeschlossenen, achsparallel zur Längsachse L der Kurbelwelle K sich etwa über die Hälfte der in Längsrichtung L gemessenen Breite der Lagerfläche F erstreckenden Horizontalabschnitt 27, einen an den Horizontalabschnitt 27 angeschlossenen, sich in Umfangsrichtung der Lagerfläche F und parallel zum ersten Heizleiterast 26 sich erstreckenden zweiten bogenförmigen Heizleiterast 28, einen an den Heizleiterast 28 angeschlossenen, sich parallel zum Horizontalabschnitt 27 erstreckenden und auf den ersten Heizleiterast 26 zulaufenden zweiten Horizontalabschnitt 29 und einen an den Horizontalabschnitt 29 angeschlossenen, parallel zum ersten Vertikalabschnitt 25 sich erstreckenden zweiten Vertikalabschnitt 30 auf, der wiederum an dessen einen Schmalseite in einen sich parallel zum ersten Horizontalabschnitt 24 erstreckenden langen Horizontalabschnitt 31 übergeht. An der anderen Schmalseite dieses Horizontalabschnitts 31 ist ein Anschluss 32b angeordnet, über die das den Heizleiter 23 durchströmende Kühlmittel zur Kühlmittelversorgung 4 zurückströmt.

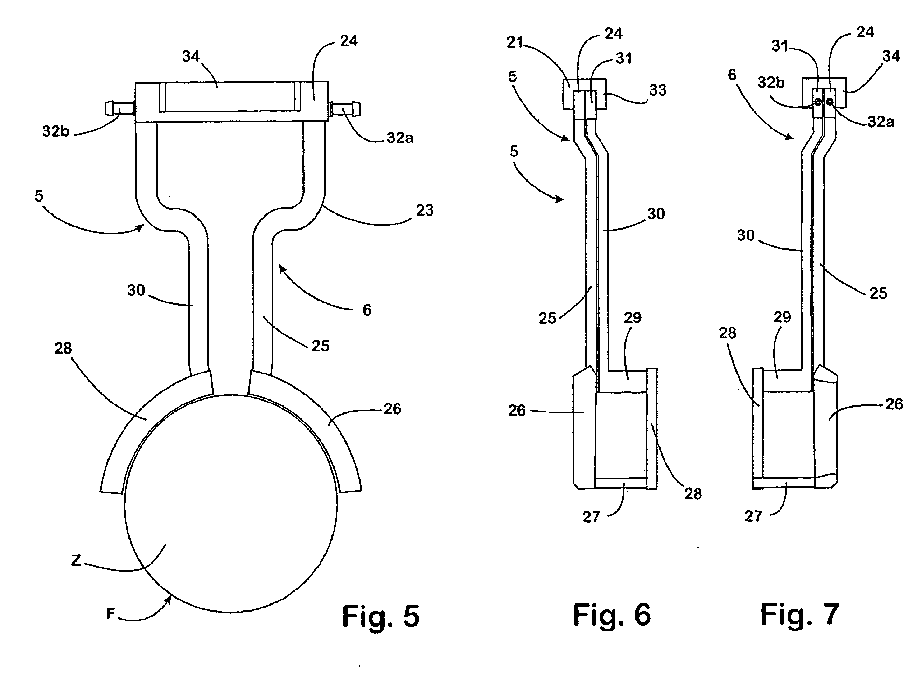

Aufgrund ihrer spiegelsymmetrischen Formgebung umfassen die Heizleiteräste 26,28 der Arbeitsteile 6,7 gemeinsam jeweils die jeweils oben liegende Hälfte der Lagerfläche F des Zapfens Z (Fig. 5).

Auf ihren oben angeordneten, parallel zueinander verlaufenden langen Horizontalabschnitten 24,31 tragen die Arbeitsteile 6,7 jeweils Kerne 33,34.

Das Arbeitsteil 6 ist mit seinem Kern 33 in geringem Abstand unterhalb des Energieversorgungsteils 5 so angeordnet, dass sich sein Kern 33 achsparallel zur und unmittelbar unterhalb des Kerns 21 des Energieversorgungsteils 3 erstreckt.

Genauso ist das Arbeitsteil 7 mit seinem Kern 34 in geringem Abstand unterhalb des Energieversorgungsteils 5 so angeordnet, dass sich sein Kern 34 achsparallel zur und unmittelbar unterhalb des Kerns 22 des Energieversorgungsteils 3 erstreckt. Die Kerne 21,22 und die Leiter 12,15 des Energieversorgungsteils 3 bilden so gemeinsam mit den Kernen 33,34 und den Leitern 24 der Arbeitsteile 5,6 die Übertragungseinheit U, durch die die für die Erwärmung der Lagerfläche F benötigte elektrische Energie berührungslos von dem fest mit der Energieversorgung 3 verbundenen Energieversorgungsteil 5 auf die Arbeitsteile 6,7 übertragen wird.

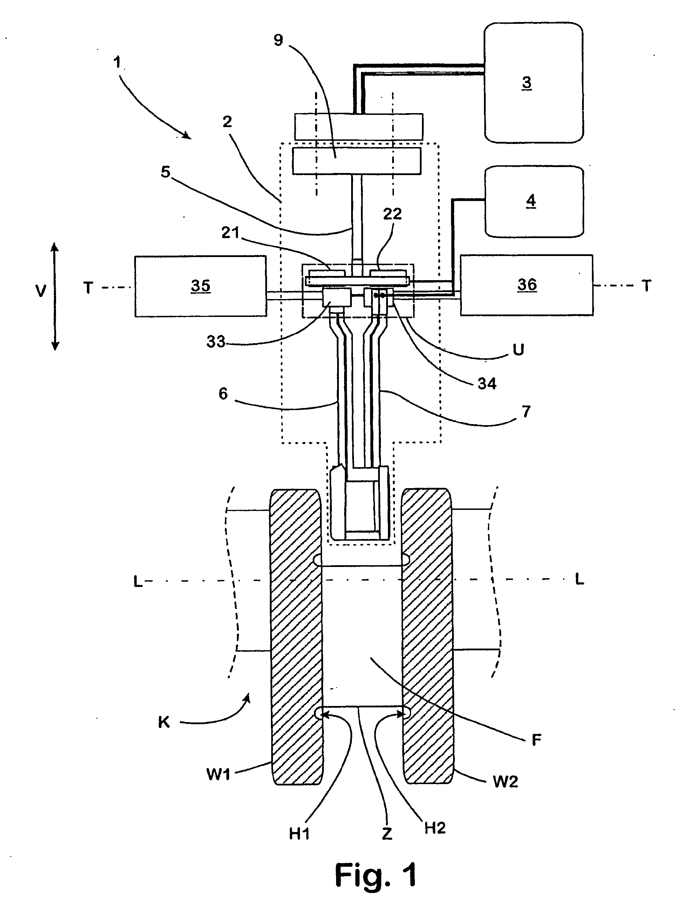

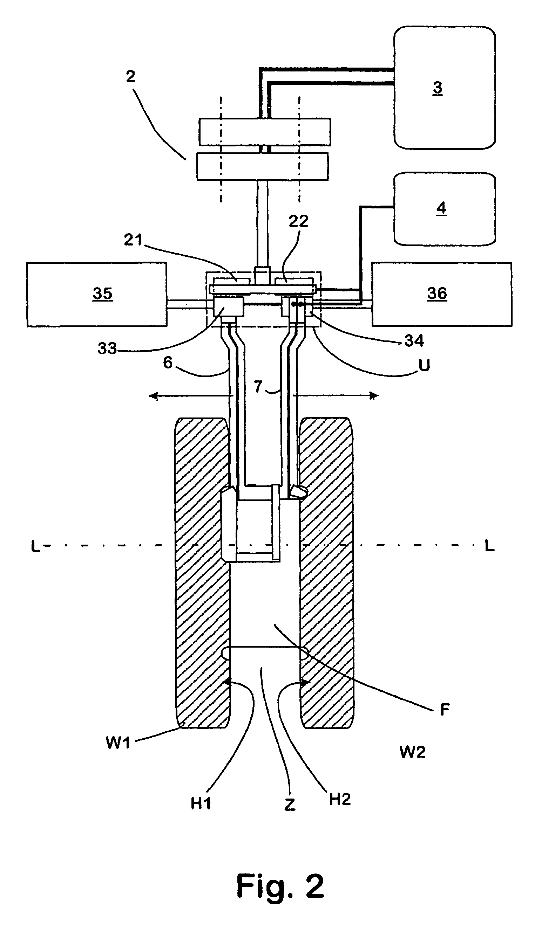

Mittels Stelleinrichtungen 35,36 können die Arbeitsteile 5,6 aus einer Normalposition, in der sie sich in einer möglichst eng benachbarten Stellung befinden (Fig. 1), so dass die von den Arbeitsteilen 6,7 zusammen eingenommene, in Richtung der Längsachse L gemessene Breite kleiner ist als die lichte Weite des von den Wangen W1,W2 seitlich begrenzten Raums, in eine in Längsrichtung L auseinander gerückte Arbeitsposition bewegt werden, in der sie mit ihren Heizleiterästen 26 in die jeweils zugeordnete Hinterschneidung H1,H2 greifen (Fig. 2). Die in Richtung der Längsachse L gemessene Breite und die Anordnung der Kerne 21,22;33,34 ist dabei so aufeinander abgestimmt, dass sich die Kerne 33,34 auch bei auseinander gerückter Stellung der Arbeitsteile 6,7 noch innerhalb der durch die Kerne 33,34 des Energieversorgungsteils 5 abgedeckten Breite befinden, so dass auch in dieser Stellung die induktiv erfolgende Übertragung der elektrischen Energie mit geringen Verlusten durchgeführt werden kann.

Zum Härten der Lagerfläche F wird der Induktor 2 mit seinen in Normalposition befindlichen Arbeitsteilen 6,7 auf die Lagerfläche F zugestellt, bis die Heizleiteräste 26,28 der Arbeitsteile 6,7 auf der Lagerfläche F sitzen. Anschließend werden die Arbeitsteile 6,7 in Richtung der Längachse L auseinander bewegt, bis ihre Heizleiteräste 26 in die ihnen zugeordnete Hinterschneidung H1,H2 greifen. Anschließend wird in an sich bekannter Weise die Härtungsbehandlung durchgeführt. Sobald diese abgeschlossen ist, werden die Arbeitsteile 6,7 von den Stelleinrichtungen 35,36 wieder in die Normalposition bewegt und der Induktor 2 von der nun gehärteten Lagerfläche F in Vertikalrichtung V wegbewegt, bis die Kurbelwelle K ohne die Gefahr eines Zusammenstoßes aus der hier nicht gezeigten Aufspannung entnommen werden kann oder der Induktor 2 ungehindert zur nächsten zu härtenden Lagerfläche F bewegt werden kann.

### BEZUGSZEICHEN

- 1: Vorrichtung zum induktiven Erwärmen und Härten der Lagerfläche F des Hubzapfens Z
- 2: Induktor
- 3: Energieversorgung
- 4: Kühlmittelversorgung
- 5: Energieversorgungsteil des Induktors 2
- 6,7: Arbeitsteile des Induktors 2
- 8: Leiter des Energieversorgungsteils 5
- 9: Anschlussabschnitt des Energieversorgungsteils 8
- 10,18: Vertikalabschnitte des Leiters 8
- 11-17: Horizontalabschnitte des Leiters 8
- 19,20: Anschlüsse des Leiters 8 für eine Kühlwasserzu- und -abführung
- 21,22: Kerne der Übertragungseinheit U
- 23: jeweiliger Heizleiter der Arbeitsteile 5,6
- 24,27,29: Horizontalabschnitte des Heizleiters 23
- 25,30: Vertikalabschnitte des Heizleiters 23
- 32a,32b: Anschlüsse für eine Kuhlwasserzu- und -abfuhr des Heizleiters 23
- 26: erster gebogener Heizleiterast des Heizleiters 8
- 28: zweiter gebogener Heizleiterast des Heizleiters 23
- 33: Kerne des Arbeitsteils 6
- 34: Kerne des Arbeitsteils 7
- 35,36: Stelleinrichtungen

- F: Lagerfläche
- H1,H2: Hinterschneidungen
- K: Kurbelwelle
- L: Längsachse der Kurbelwelle K
- T: Teilungsebene des Induktors 2
- U: Übertragungseinheit
- V: vertikale Richtung
- W1,W2: Kurbelwangen
- Z: Hubzapfen

## Patentansprüche

1. Vorrichtung zum Härten der Oberfläche (F) eines zylindrischen Abschnitts (Z) eines Werkstücks (K), bei dem im Übergangsbereich zwischen dem zylindrischen Abschnitt (Z) und einem angrenzenden Werkstückteil (W1,W2) eine in Achsrichtung (L) des Werkstücks (K) in das Werkstückteil (W1,W2) eingeschnittene Hinterschneidung (H1,H2) ausgebildet ist, mit einem Induktor (2), der einen in Umfangsrichtung der zu härtenden Oberfläche (F) verlaufenden Heizleiterast (26) zum induktiven Erwärmen des betreffenden Abschnitts (Z) aufweist, mit einer Stelleinrichtung (35,36) zum Einrücken des Heizleiterastes (26) des Induktors (2) in die Hinterschneidung (H1,H2) und mit einer Energieversorgung (3), welche den Induktor (2) im Betrieb mit elektrischer Energie versorgt, **dadurch gekennzeichnet,**
- **dass** der Induktor (2) in einen Energieversorgungsteil (5), der an die Energieversorgung (3) angeschlossen ist, und einen Arbeitsteil (6,7) aufgeteilt ist, der den Heizleiterast (26) umfasst und mit der Stelleinrichtung (35,36) verkoppelt ist, die den Arbeitsteil (6,7) zum Einrücken des Heizleiterastes (26) in die Hinterschneidung (H1,H2) relativ zur zu härtenden Oberfläche (F) und zum Energieversorgungsteil (5) verschiebt, und
- d a s s eine Übertragungseinheit (U) vorgesehen ist, die die für die induktive Erwärmung der zu härtenden Oberfläche (F) benötigte elektrische Energie berührungslos vom Energieversorgungsteil (5) auf den Arbeitsteil (6,7) des Induktors (2) überträgt.

2. Vorrichtung nach Anspruch 1, **dadurch gekennzeichnet, dass** die Teilungsebene (T) zwischen dem Arbeitsteil (6,7) und dem Energieversorgungsteil (5) parallel zur Längsachse (L) des Werkstücks (K) ausgerichtet ist.

3. Vorrichtung nach Anspruch 1, **dadurch gekennzeichnet, dass** die Teilungsebene (T) zwischen dem Arbeitsteil (6,7) und dem Energieversorgungsteil (5) quer zur Längsachse (L) des Werkstücks (K) ausgerichtet ist.

4. Vorrichtung nach einem der voranstehenden Ansprüche, **dadurch gekennzeichnet, dass** sie zwei Arbeitsteile (6,7) umfasst, von denen der eine Arbeitsteil (6) einer ersten, am einen Rand der zu härtenden Oberfläche (F) des Werkstücks (K) vorhandenen Hinterschneidung (H1) und der andere Arbeitsteil (7) einer zweiten Hinterschneidung (H2) zugeordnet ist, die am dem ersten Rand gegenüberliegenden Rand der zu härtenden Oberfläche (F) des Werkstücks (K) vorhanden ist.

5. Vorrichtung nach Anspruch 4, **dadurch gekennzeichnet, dass** die Übertragungseinheit (U) die erforderliche elektrische Energie auf beide Arbeitsteile (6,7) überträgt.

6. Vorrichtung nach einem der voranstehenden Ansprüche, **dadurch gekennzeichnet, dass** die Übertragungseinheit (U) die elektrische Energie induktiv auf den jeweiligen Arbeitsteil (6,7) überträgt.

7. Vorrichtung nach einem der voranstehenden Ansprüche, **dadurch gekennzeichnet, dass** die Übertragungseinheit (U) nach Art eines Transformators ausgebildet ist, dessen eine Seite dem Energieversorgungsteil (5) und dessen andere Seite dem Arbeitsteil (6,7) zugeordnet ist.

8. Verwendung einer gemäß einem der voranstehenden Ansprüche ausgebildeten Vorrichtung (1) zum Härten einer Lagerstelle (Z) einer Welle (K), bei der an einem Übergang zwischen der Lagerstelle (Z) und einem angrenzenden Wellenabschnitt (W1,W2) eine in Achsrichtung (L) der Welle (K) ausgerichtete Hinterschneidung (H1,H2) ausgebildet ist.

9. Verwendung nach Anspruch 8, **dadurch gekennzeichnet, dass** die Welle eine Kurbelwelle (K) für einen Verbrennungsmotor ist.

10. Verwendung nach Anspruch 8 oder 9, **dadurch gekennzeichnet, dass** an beiden Rändern der Lagerstelle (Z) am Übergang zum dort jeweils benachbarten Wellenabschnitt (W1,W2) jeweils eine Hinterschneidung (H1,H2) ausgebildet ist.

## Claims

1. Device for hardening the surface (F) of a cylindrical section (Z) of a workpiece (K), in which an undercut (H1, H2) incised into the workpiece part (W1, W2) in the axial direction (L) of the workpiece (K) is formed in the transition region between the cylindrical section (Z) and an adjacent workpiece part (W1, W2), having an inductor (2) which comprises a heating conductor branch (26) extending in the circumferential direction of the surface (F) to be hardened for inductive heating of the relevant section (Z), having a control instrument (35, 36) for pressing the heating conductor branch (26) of the inductor (2) into the undercut (H1, H2) and having an energy supply (3), which supplies the inductor (2) with electrical energy during operation,
**characterised in that**
- the inductor (2) is divided into an energy supply part (5) which is connected to the energy supply (3), and a working part (6, 7) which comprises the heating conductor branch (26) and is coupled to the control instrument (35, 36) which displaces the working part (6, 7) relative to the surface (F) to be hardened and relative to the energy supply part (5) in order to press the heating conductor branch (26) into the undercut (H1, H2), and
- **in that** a transmission unit (U) is provided, which transmits the electrical energy required for the inductive heating of the surface (F) to be hardened contactlessly from the energy supply part (5) to the working part (6, 7) of the inductor (2).

2. Device according to Claim 1, **characterised in that** the dividing plane (T) between the working part (6, 7) and the energy supply part (5) is orientated parallel to the longitudinal axis (L) of the workpiece (K).

3. Device according to Claim 1, **characterised in that** the dividing plane (T) between the working part (6, 7) and the energy supply part (5) is orientated transversely to the longitudinal axis (L) of the workpiece (K).

4. Device according to one of the preceding claims, **characterised in that** it comprises two working parts (6, 7), of which one working part (6) is assigned to a first undercut (H1) provided on one edge of the surface (F) to be hardened of the workpiece (K) and the other working part (7) is assigned to a second undercut (H2) which is provided on the opposite edge from the first edge of the surface (F) to be hardened of the workpiece (K).

5. Device according to Claim 4, **characterised in that** the transmission unit (U) transmits the required electrical energy to both working parts (6, 7).

6. Device according to one of the preceding claims, **characterised in that** the transmission unit (U) transmits the electrical energy inductively to the working part (6, 7) in question.

7. Device according to one of the preceding claims, **characterised in that** the transmission unit (U) is configured in the manner of a transformer, one side of which is assigned to the energy supply part (5) and the other side of which is assigned to the working part (6, 7).

8. Use of a device (1) formed according to one of the preceding claims for hardening a bearing position (Z) of a shaft (K), in which an undercut (H1, H2) orientated in the axial direction (L) of the shaft (K) is formed at a transition between the bearing position (Z) and an adjacent shaft section (W1, W2).

9. Use according to Claim 8, **characterised in that** the shaft is a crankshaft (K) for a combustion engine.

10. Use according to Claim 8 or 9, **characterised in that** an undercut (H1, H2) is respectively formed on both edges of the bearing position (Z) at the transition to the respectively neighbouring shaft section (W1, W2) there.

## Revendications

1. Dispositif de durcissement de la surface (F) d'une section cylindrique (Z) d'une pièce usinée (K), dans laquelle, dans la région intermédiaire, située entre la section cylindrique (Z) et une partie (W1, W2) de pièce usinée adjacente, est formée une dépouille (H1, H2) qui est taillée dans ladite partie (W1, W2) de pièce usinée, dans la direction axiale (L) de la pièce usinée (K), avec un inducteur (2) qui est doté d'un élément conducteur chauffant (26) s'étendant dans la direction périphérique de la surface (F) à durcir, pour le chauffage inductif de la section cylindrique (Z) concernée, avec un dispositif de réglage (35, 36) pour faire entrer l'élément conducteur chauffant (26) de l'inducteur (2) dans la dépouille (H1, H2), et avec un système d'alimentation en énergie (3) qui alimente l'inducteur (2) en énergie électrique pendant le fonctionnement, **caractérisé en ce que**
- l'inducteur (2) est divisé en une partie d'alimentation en énergie (5), qui est raccordée au système d'alimentation en énergie (3), et en une partie de travail (6, 7) qui comprend l'élément conducteur chauffant (26) et est couplée avec le dispositif de réglage (35, 36) qui déplace, par rapport à la surface (F) à durcir et à la partie d'alimentation en énergie (5), la partie de travail (6, 7) pour l'introduction de l'élément conducteur chauffant (26) dans la dépouille (H1, H2) et q u e
- une unité de transfert (U) est prévue pour transmettre sans contact, de la partie d'alimentation en énergie (5) à la partie de travail (6, 7) de l'inducteur (2), l'énergie électrique, nécessaire au chauffage inductif de la surface (F) à durcir.

2. Dispositif selon la revendication 1, **caractérisé en ce que** le plan de division (T), entre la partie de travail (6, 7) et la partie d'alimentation en énergie (5), est orienté parallèlement à l'axe longitudinal (L) de la pièce usinée (K).

3. Dispositif selon la revendication 1, **caractérisé en ce que** le plan de division (T), entre la partie de travail (6, 7) et la partie d'alimentation en énergie (5), est orienté perpendiculairement à l'axe longitudinal (L) de la pièce usinée (K).

4. Dispositif selon l'une des revendications précédentes,
**caractérisé en ce qu'**il comprend deux parties de travail (6, 7) dont l'une, la partie de travail (6), est associée à une première dépouille (H1), qui est prévue sur un bord de la surface (F) de la pièce usinée (K) à durcir, et l'autre, la partie de travail (7), est associée à une deuxième dépouille (H2), qui est prévue sur le bord de la surface (F) de la pièce usinée (K) situé à l'opposé du premier bord.

5. Dispositif selon la revendication 4,
**caractérisé en ce que** l'unité de transfert (U) transfert l'énergie électrique, nécessaire sur les deux parties de travail (6, 7).

6. Dispositif selon l'une des revendications précédentes,
**caractérisé en ce que** l'unité de transfert (U) transfert l'énergie électrique, nécessaire respectivement à chaque partie de travail (6, 7).

7. Dispositif selon l'une des revendications précédentes,
**caractérisé en ce que** l'unité de transfert (U) est réalisée à la manière d'un transformateur, dont l'un des côtés est associé à la partie d'alimentation en énergie (5) et l'autre côté à la partie de travail (6, 7).

8. Utilisation d'un dispositif (1) selon l'une des revendications précédentes pour le durcissement d'une zone d'appui (Z) d'un arbre (K), dans lequel une dépouille (H1, H2), orientée dans la direction axiale (L) dudit arbre (K), est formée à une transition entre la zone d'appui (Z) et une section (W1, W2) dudit arbre adjacente.

9. Utilisation selon la revendication 8,
**caractérisée en ce que** ledit arbre est un vilebrequin (K) d'un moteur à combustion interne.

10. Utilisation selon revendication 8 ou 9,
**caractérisée en ce qu'**une contre-dépouille (H1, H2) est chaque fois formée de part et d'autre de la zone d'appui (Z), à la transition entre les sections d'arbre voisines (W1, W2).
